# EUROPEAN PATENT SPECIFICATION

(11) **EP 1 043 414 B1**
(45) Date of publication and mention of the grant of the patent: **22.10.2003**
(21) Application number: 00107084.6
(22) Date of filing: 05.04.2000
(51) Int. Cl.: C22C 29/00, C22C 29/04, B23C 5/06

(54) **Cermet cutting insert**
Schneideinsatz aus Cermet
Plaquette de coupe en cermet

(30) Priority: 05.04.1999 JP 9764799; 26.04.1999 JP 11801399; 19.07.1999 JP 20408399
(43) Date of publication of application: 11.10.2000
(73) Proprietor: MITSUBISHI MATERIALS CORPORATION, Chiyoda-ku, Tokyo 100 (JP)
(72) Inventor: Fujisawa, Takashi, Mitsubishi Materials Corp., Yuuki-gun, Ibaraki-ken (JP); Takaoka, Hidemitsu, Mitsubishi Materials Corp., Yuuki-gun, Ibaraki-ken (JP); Fukumura, Masafumi, Mitsubishi Materials Corp., Yuuki-gun, Ibaraki-ken (JP); Tsujisaki, Hisafumi, Mitsubishi Materials Corp., Yuuki-gun, Ibaraki-ken (JP)
(74) Representative: HOFFMANN - EITLE

(56) References cited:
- EP-A- 0 440 157
- EP-A- 0 600 115
- GB-A- 1 478 511
- US-A- 5 370 719
- US-A- 5 460 893
- US-A- 5 655 860
- KALPAKJIAN S.: "Manufacturing Engineering and Technology" 1992 , ADDISON-WESLEY PUBLISHING COMPANY , USA XP002140670 * Pages 715-721, 729 *

## Description

### [Detailed Description of the Invention]

### [Industrial Field of the Invention]

The present invention relates to a cermet, cutting insert, and a face milling tool mounting the insert. The cutting edge of the cutting insert does not produce defects or chipping (micro-defects) under significantly severe cutting conditions, such as high feeding rates and high cutting speeds, and exhibits superior cutting performance for long periods.

### [Description of the Related Art]

A known cermet cutting insert has a texture comprising 75 to 95 percent by area of a carbonitride hard phase primarily composed of Ti and the balance being a metal binding phase and incidental impurities, according to microscopic texture observation of a cross-section of the cermet, wherein the hard phase has a core-shell structure comprising a core and a shell (peripheral region) which are substantially composed of compound carbonitride of Ti and M wherein M is at least one metal selected from Groups 4a, 5a, and 6a in the Periodic Table, and the metal binding phase comprises a Ni-Co alloy containing
nickel (Ni): 10 to 35 percent by weight, and
cobalt (Co): 45 to 70 percent by weight,
wherein the total amount of nickel and cobalt is at least 90 percent by weight.

It is also known that the above cermet is produced by compounding a powdered Ti carbonitride and/or a powdered compound carbonitride of Ti and/or Ti and M, wherein M is at least one metal selected from Groups 4a, 5a, and 6a in the Periodic Table, at least one of a powdered carbide of the M and a powdered nitride of the M, and powdered Co or Ni, as a powdered material for forming the binding phase, in a predetermined composition; wet-mixing, drying, and then press-molding these powdered materials to form a green compact; and sintering the green compact under conditions of maintaining a temperature of 1,420 to 1,600°C in a reduced-pressure nitrogen atmosphere and slowly cooling.

During sintering, a core of hard phase is formed mainly from carbonitride powder, and a shell of hard phase is formed due to a reaction between carbide powder, nitride powder, and a part of cabonitride powder.

In addition, it is known that the chamfer honed width (hereinafter merely referred to as "honed width") formed on the main cutting edge and the flat cutting edge of the cutting insert for the face milling tool using the cermet are:
0.10 to 0.25 mm for the main cutting edge, and
0.10 to 0.25 mm for the wiper cutting edge.

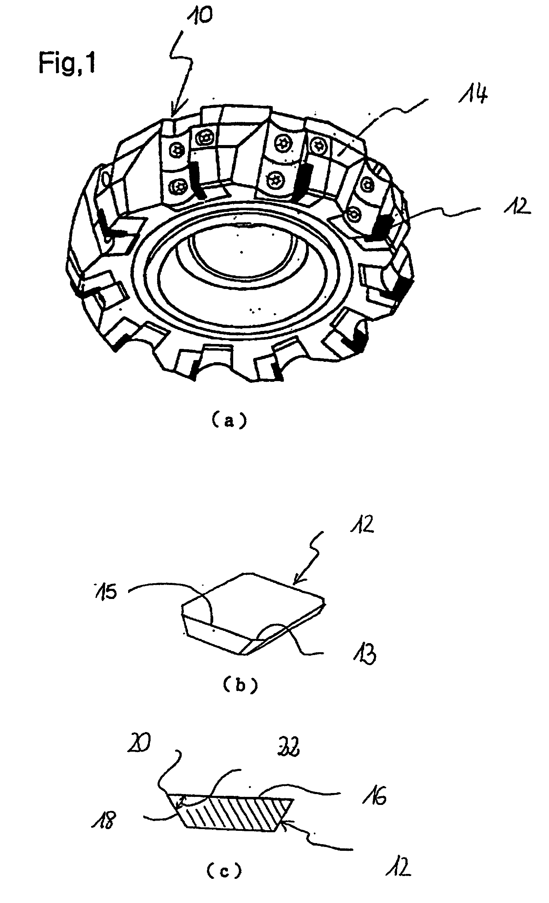

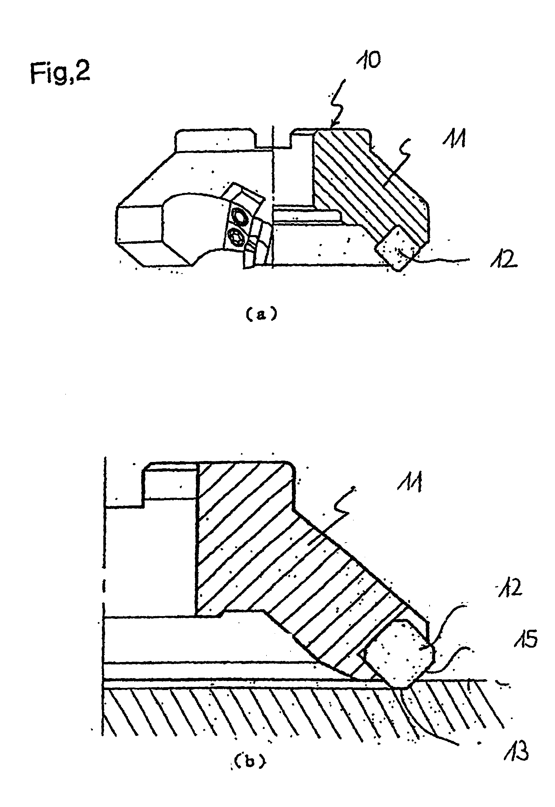

In the case of the face milling tool (10), as shown by a perspective view in Fig. 1(a), a front view, partly in section, in Fig. 2(a), and an enlarged partial longitudinal cross-sectional view in Fig. 2(b), it is known that a plurality of cutting inserts (12) (hereinafter, the cutting insert is referred to as an insert) are detachably mounted at a given interval onto the front face of a ring tool body (14). It is also known that the insert has a shape shown by a perspective view in Fig. 1(b) and a longitudinal cross-sectional view in Fig. 1(c).

Moreover, it is well known that the angle defined by the tooth face (16) and the flank (18) at the ridge line section (20) of the cutting edge (hereinafter referred to as ridge line angle (22)) is in a range of 75° to 85° and the insert is mounted onto the ring tool body at an axial rake angle (tilt angle of the cutter body to the axis) of 5° to 15°.

In addition, it is known that a hard coating layer with a thickness of 0.5 to 10 µm is coated on the surface of the cermet substrate of the face cutting insert by a chemical vapor deposition(CVD) process and/or a physical vapor deposition(PVD) process in order to improve wear resistance of the cermet.

US 5 370 719 A discloses a TiCN-based cermet cutting insert. This cutting insert comprises 5 to 30 vol% of a binding phase. The balance comprises two hard dispersion phases, whereby the first hard dispersion phase has at least one of a duplex and triplex structure comprising a core of TiCN and the second hard dispersion phase has at least one of a duplex and triplex structure comprising a core of a carbonitride of a solid solution of Ti and at least one element selected from the group consisting of Ta, Nb, V, Hf, Zr, W, Mo and Cr. Some examples comprise a binding phase including a Co-Ni-W alloy containing tungsten, nickel and cobalt within the ranges claimed in claim 1.

### [Problems to be solved by the Invention]

In recent years, labor saving, energy saving, and cost reduction have been highly required for cutting, and cutting under high-feed-rate conditions has been desired in face milling cutting. When the above conventional face milling tool is used in high-feed-rate conditions, the flat cutting edge causes plastic deformation. As a result, significant uneven wear will occur and defects and chipping will occur at the cutting edge section of the insert. Accordingly, the insert has a relatively short service life.

In another method, the ridge line angle of the insert mounted onto the ring tool body of the face milling tool is decreased to 65° to 75°, compared to 75° to 85° of the ridge line angle of the above conventional insert, and the insert is mounted onto the ring tool body so that the tilt angle relative to the cut surface is decreased, that is, the axial rake angle, which is the tilt angle of the insert with respect to the axis of the ring tool body, is increased to 15° to 30° which is relatively larger than the axial rake angle of the conventional insert 5° to 15°. When high-feed-rate cutting is performed using the above conventional face milling tool at a ridge line angle of 65° to 75° and an axial rake angle of 15° to 30°, defects and chipping occur at the cutting edge section of the insert. Accordingly, the insert has a relatively short service life.

### [Means for solving the Problems]

The present inventors have studied and developed on milling insert which can produce a satisfactory cut surface roughness in high-feed-rate cutting for long periods, based on the above conventional cutters, and have discovered a specific cermet which has high plastic deformation resistance and does not cause uneven wear and formation of defects and chipping at a cutting edge section, and thus exhibits superior cutting performance for long periods. This cermet cutting insert has a core-shell structure comprising a core and a shell(peripheral region), which are substantially composed of a specific compound carbonitride of Ti and M wherein M is at least one metal selected from Ta, Nb, V, W, and Zr. In addition, the metal binding phase comprises a W-Ni-Co alloy containing
tungsten (W): 15 to 35 percent by weight,
nickel (Ni): 10 to 35 percent by weight, and
cobalt (Co): 35 to 70 percent by weight.

In high-feed-rate cutting a face milling tool using a wiper cutting edge having a decreased honed width of 0.02 to 0.08 mm which can maintain a satisfactory cut surface roughness, the wiper cutting edge is significantly resistant to plastic deformation, and thus, uneven wear does not substantially occur. Accordingly, superior cutting performance is maintained with a satisfactory cut surface roughness for long periods.

When the insert is mounted onto a ring tool body of the face milling tool at a decreased ridge line angle of 65° to 75° and an axial rake angle of 15° to 30°, that is, a relatively low tilt angle with respect to the cut face and when high-feed-rate cutting is performed, no defect or chipping occurs at the cutting edge section of the insert, and superior cutting performance is maintained for long periods.

When a hard coating layer with a mean thickness of 0.5 to 10 µm is coated onto the cermet substrate of the face cutting insert by chemical vapor deposition and/or physical vapor deposition, the insert is significantly resistant to plastic deformation during high-feed-rate cutting, and thus, uneven wear does not substantially occur. Accordingly, superior cutting performance is maintained with a satisfactory cut surface roughness for long periods.

The present invention has been accomplished based on the above results.

A cermet cutting insert according to the present invention comprises the features of claim 1. The cermet has a texture containing a carbonitride hard phase, a metal binding phase, and incidental impurities, and the metal binding phase comprises a Co-Ni-W alloy containing
tungsten (W): 15 to 35 percent by weight,
nickel (Ni): 10 to 35 percent by weight, and
cobalt (Co): 35 to 70 percent by weight,
wherein the total amount of tungsten, nickel, and cobalt is at least 90 percent by weight.

Moreover, the cermet has a texture comprising 75 to 95 percent by area of a carbonitride hard phase and the balance being a metal binding phase and incidental impurities, according to microscopic texture observation of a cross-section of the cermet.

In addition, the cermet has the carbonitride hard phase having a core-shell structure comprising a core and a shell which are substantially composed of compound carbonitride of Ti and M wherein M is at least one metal selected from the group consisting of Ta, Nb, V, W, and Zr.

In a cutting insert for face milling using the above cermet, the cutting insert has a main cutting edge and a face cutting edge, the honed width of the main cutting edge is in a range of 0.10 to 0.25 mm, and the honed width of the wiper cutting edge is 0.02 to 0.08 mm. A plurality of cutting insert is detachably mounted onto a front face of a ring tool body. This cermet cutting insert does not form a rough cut surface and exhibits high wear resistance at high-feed-rate cutting.

In a face milling tool including a ring tool body and the above cutting insert, as it is claimed in claim 4, the angle defined by a tooth face and a flank at a cutting edge section is 65 to 75° and the cutting insert is mounted onto the ring tool body at an axial rake angle of 15 to 30°.

The above cutting insert may be covered with a hard coating layer which is formed by at least one process of a chemical vapor deposition process and a physical vapor deposition and which has a mean thickness of 0.5 to 10 µm.

In the above cutting insert, the hard coating layer is composed of at least one layer composed of nitride, carbide, oxide, and carbonitride of at least one element of Ti and Al.

The reasons for limitation of the composition of the cermet which constitutes the insert of the cutter in accordance with the present invention will now be described.

### (a) Ratio of Cermet Carbonitride Hard Phase

When the ratio of the cermet hard phase is less than 75 percent by area, the metal binding phase is relatively enriched, and thus, desired wear resistance is not achieved. When the ratio exceeds 95 percent by area, sintering ability is deteriorated and thus desired strength is not achieved. Accordingly, the rate is set to be 75 to 95 percent by area.

### (b) Composition of Cermet Metal Binding Phase

The W component significantly improves plastic deformation resistance of the metal binding phase. At less than 15 percent by weight of the W component, the plastic deformation resistance is not improved to a desired level. At more than 35 percent by weight, toughness of the metal binding phase decreases and thus defects and chipping (micro-defects) readily occur at the cutting edge section. Accordingly, the W content is set to be 15 to 35 percent by weight.

The Ni component improves wettability to the carbonitride hard phase and thus chipping resistance. At less than 10 percent by weight of the Ni component, the chipping resistance is not improved to a desired level. At more than 35 percent by weight, the strength and the plastic deformation resistance of the metal binding phase decrease and wear is facilitated. Accordingly, the Ni content is set to be 10 to 35 percent by weight.

The Co component improves sintering ability and thus the strength of the milling insert. At less than 35 percent by weight of the Co component, the strength is not improved to a desired level. At more than 70 percent by weight, the plastic deformation resistance tends to decrease. Accordingly, the Co content is set to be 35 to 70 percent by weight.

When the total content of W, Ni, and Co is less than 90 percent by weight, the strength of the metal binding phase rapidly decreases, and thus, defects and chipping readily occur at the cutting edge section. Accordingly, the total content of W, Ni, and Co is set to be 90 percent by weight or more.

### (c) Honed Width

Honing is performed to improve stability of the cutting edge, and the honed width of the wiper cutting edge is preferably decreased in order to improve the surface roughness of the cut workpiece. Since the W component in the metal binding phase significantly improves the plastic deformation resistance of the binding phase, plastic deformation, which causes uneven wear, does not occur during high-feed-rate cutting when the honed width of the cutting edge section and particularly the wiper cutting edge is decreased to 0.08 mm or less. When the honed width of the wiper cutting edge is less than 0.02 mm, the stability of the cutting edge decreases, resulting in defects and chipping. When the honed width exceeds 0.08 mm, the surface roughness of the cut workpiece decreases. Accordingly, the honed width of the wiper cutting edge is set to be 0.02 to 0.08 mm. The honed width of the main cutting edge is within a conventional range, that is, 0.10 to 0.25 mm.

### (d) Axial Rake Angle and Ridge Line Angle of Face Milling Tool

In the face milling tool of the present invention, the ridge line angle of the insert and the axial rake angle, which is the angle defined by the mounted insert and the cutter body are necessarily determined when milling is performed under high-feed-rate, high-speed cutting conditions. When the ridge line angle of the insert exceeds 75° or when the axial rake angle is less than 15° (these are values for conventional inserts), high-feed-rate and high-speed cutting cannot be performed. When the ridge line angle of the insert is less than 65° or when the axial rake angle exceeds 30°, defects readily occur at the cutting edge section of the insert in high-feed-rate and high-speed cutting.

### (e) Hard Coating Layer

The hard coating layer includes at least one layer of nitrides, carbides, oxide, and carbonitrides of Ti and/or Al. When the mean thickness thereof is less than 0.5 µm, desired wear resistance is not ensured. When the mean thickness exceeds 10 µm, defects and chipping readily occur on the cutting edge. Thus, the mean thickness is set to be 0.5 to 10 µm.

### [Embodiments of the Invention]

The face milling tool of the present invention will now be described in more detail with reference to the following Examples and figures, in which:
Fig. 1(a) shows a perspective view of a face milling tool;
Fig. 1(b) and 1(c) show inserts for a face milling tool of Fig. 1(a);
Fig. 2(a) shows a front view, partly in section of the face milling tool of Fig. 1(a); and
Fig. 2(b) shows an enlarged partial longitudinal cross-sectional view of the face milling tool in engagement with a workpiece.

### (Example 1)

As powdered raw materials for forming hard phase, a powdered compound carbonitride of Ti and Ta having a composition of (Ti_{0.9}Ta_{0.1})C_{0.7}N_{0.3} by atomic percent, a powdered compound carbonitride of Ti and Nb having a composition of (Ti_{0.9}Nb_{0.1})C_{0.7}N_{0.3} by atomic percent, a powdered compound carbonitride of Ti, Ta, and Zr having a composition of (Ti_{0.8}Ta_{0.1}Zr_{0.1})C_{0.5}N_{0.5} by atomic percent, a powdered compound carbonitride of Ti having a composition of TiC_{0.5}N_{0.5} by atomic percent, a powdered compound carbonitride of Ti, W, and Nb having a composition of (Ti_{0.7}W_{0.2}Nb_{0.1})C_{0.4}N_{0.6} by atomic percent, a powdered compound carbonitride of Ti and V having a composition of (Ti_{0.9}V_{0.1})C_{0.6}N_{0.4} by atomic percent, a powdered compound carbonitride of Ti, V, and Zr having a composition of (Ti_{0.8}V_{0.1}Zr_{0.1})C_{0.7}N_{0.3} by atomic percent, a powdered compound carbonitride of Ti and Zr having a composition of (Ti_{0.7}Zr_{0.3})C_{0.5}N_{0.5} by atomic percent, a powdered compound carbonitride of Ti, Ta, and Nb having a composition of (Ti_{0.8}Ta_{0.1}Nb_{0.1})C_{0.7}N_{0.3} by atomic percent, and a powdered compound carbonitride of Ti, Ta, V, and W having a composition of (Ti_{0.7}Ta_{0.1}V_{0.1}W_{0.1})C_{0.6}N_{0.4} by atomic percent, were prepared with predetermined mean grain sizes in a range of 1 to 2 µm. And powdered TiN, powdered ZrC, powdered TaC, powdered NbC, and powdered WC were prepared with mean grain sizes in a range of 1 to 2 µm. As powdered raw materials for forming the binding phase, powdered W, powdered Ni, and powdered Co were prepared. These powdered binding materials had mean grain sizes in a range of 1 to 2 µm.

These raw materials were compounded based on the formulations shown in Tables 1 and 2, and were wet-mixed in a ball mill for 72 hours. Each mixture was dried and press-molded under a pressure of 147,15 MPa [15 kgf/mm²] to form a green compact. The green compact was heated to 1,500°C at a heating rate of 2 °C/min in a vacuum, was maintained at 1,500°C for 1 hour in a reduced-pressure nitrogen atmosphere of 10 torr for sintering, and was then cooled. The main cutting edge (15) and the wiper cutting edge (13) of each cutting edge section were subjected to honing as shown in Table 3 or 4, wherein the honed width of the main cutting edge was an ordinary value while the honed width of the wiper cutting edge was smaller than ordinary values. Milling inserts (types 1 to 10) of the present invention for face milling tools and milling inserts (types 1 to 10) for comparison were thereby prepared. Each milling insert had a shape of SEEN1203AFTN1 (ridge line angle: 70°).

In the milling inserts (types 1 to 10) for comparison, the W content in the binding phase of each cermet is 7 percent by weight or less or the binding phase does not contain W.

A texture of an arbitrary cross-section of each milling insert was observed by scanning electron microscopy, and the rate of the hard phase having a core-shell structure in the texture was determined from the observed image using an image analyzer, as shown in Tables 3 and 4.

The W, Ni, and Co contents by weight in the binding phase of the cermet constituting the insert were determined by a wet analysis process, as shown in Tables 3 and 4.

One milling insert (12) of each type was mounted with screws onto the front face of a cutter (11) having a face diameter of 200 mm, as shown in Fig. 1(a), to form a face milling tool (10) having an axial rake angle of 20°, and carbon steel was subjected to a dry, high-feed-rate milling cutting test using the face milling tool (10) under the following conditions to determine the cutting duration until the cutter reached the end of its service life:
Workpiece to be cut: Japanese Industrial Standard (JIS) S45C plate
Cutting speed: 250 m/min
Depth of cut: 2.5 mm
Feed rate: 0.4 mm/tooth

The surface roughness of the cut workpiece after one minute from the start of cutting was measured. The surface roughness Rz was in a range of 1.9 to 2.8 and was a significantly satisfactory level.

The results shown in Tables 1 to 4 demonstrate that each of the face milling tools (10) having milling inserts (12) (types 1 to 10) of the present invention exhibits high plastic deformation resistance during high-feed-rate cutting using a wiper cutting edge (13) having a decreased honed width of 0.02 to 0.08 mm, for the purpose of maintaining a satisfactory cut surface roughness, and maintains superior cutting performance for long periods, because the binding phase in the cermet has a high W content. In contrast, each of the face milling tools (10) having milling inserts (12) (types 1 to 10) for comparison exhibits uneven wear due to plastic deformation during high-feed-rate cutting using a wiper cutting edge having a decreased honed width, and has a relatively short service life, because the binding phase in the cermet does not contain W or contains at most 7 percent by weight of W, which is insufficient to maintain desirable plastic deformation resistance.

### (Example 2) (not part of the invention)

As powdered raw materials for forming hard phase, a powdered compound carbonitride of Ti and Ta having a composition of (Ti_{0.9}Ta_{0.1})C_{0.7}N_{0.3} by atomic percent, a powdered compound carbonitride of Ti and Nb having a composition of (Ti_{0.9}Nb_{0.1})C_{0.7}N_{0.3} by atomic percent, a powdered compound carbonitride of Ti, Ta, and Zr having a composition of (Ti_{0.8}Ta_{0.1}Zr_{0.1})C_{0.5}N_{0.5} by atomic percent, a powdered compound carbonitride of Ti having a composition of TiC_{0.5}N_{0.5} by atomic percent, a powdered compound carbonitride of Ti, W, and Nb having a composition of (Ti_{0.7}W_{0.2}Nb_{0.1})C_{0.4}N_{0.6} by atomic percent, a powdered compound carbonitride of Ti and V having a composition of (Ti_{0.9}V_{0.1})C_{0.6}N_{0.4} by atomic percent, a powdered compound carbonitride of Ti, V, and Zr having a composition of (Ti_{0.8}V_{0.1}Zr_{0.1})C_{0.7}N_{0.3} by atomic percent, a powdered compound carbonitride of Ti and Zr having a composition of (Ti_{0.7}Zr_{0.3})C_{0.5}N_{0.5} by atomic percent, a powdered compound carbonitride of Ti, Ta, and Nb having a composition of (Ti_{0.8}Ta_{0.1}Nb_{0.1})C_{0.7}N_{0.3} by atomic percent, and a powdered compound carbonitride of Ti, Ta, V, and W having a composition of (Ti_{0.7}Ta_{0.1}V_{0.1}W_{0.1})C_{0.6}N_{0.4} by atomic percent, were prepared with predetermined mean grain sizes in a range of 1 to 2 µm. And powdered TiN, powdered ZrC, powdered TaC, powdered NbC, and powdered WC were prepared with mean grain sizes in a range of 1 to 2 µm. As powdered raw materials for forming the binding phase, powdered W, powdered Ni, and powdered Co were prepared. These powdered binding materials had mean grain sizes in a range of 1 to 2 µm.

These raw materials were compounded based on the formulations shown in Tables 5 and 6, and were wet-mixed in a ball mill for 72 hours. Each mixture was dried and press-molded under a pressure of 147,15 MPa [15 kgf/mm²] to form a green compact. The green compact was heated to 1,550°C at a heating rate of 2 °C/min in a vacuum, was maintained at 1,550°C for 1.5 hours in a reduced-pressure nitrogen atmosphere of 5 torr for sintering, and was then cooled. The main cutting edge and the wiper cutting edge of each cutting edge section were subjected to honing so that the honed width of the main cutting edge and the wiper cutting edge were 0.20 mm and 0.15 mm (which is outside the claimed range), respectively. Milling insert (types 1 to 10) for face milling tools and milling inserts (types 1 to 10) for comparison were thereby prepared. Each milling insert had a shape of SEEN1203AFTN1 and a ridge line angle shown in Tables 7 and 8.

In the milling inserts (types 1 to 10) for comparison, the binding phases contain 7 percent by weight or less of W or do not contain W.

A texture of an arbitrary cross-section of each milling insert was observed by scanning electron microscopy, and the rate of the hard phase having a core-shell structure in the texture was determined from the observed image using an image analyzer, as shown in Tables 7 and 8.

The W, Ni, and Co contents by weight in the binding phase of the cermet constituting the insert were determined by a wet analysis process, as shown in Tables 7 and 8.

Ten milling inserts of each type were mounted with screws onto the front face of a cutter having a face diameter of 200 mm, as shown in Fig. 1(a), at an axial rake angle shown in Tables 7 and 8 to form a face milling tool, and a steel alloy was subjected to a dry, high-feed-rate milling cutting test using the face milling tool under the following conditions to determine the maximum width of the flank wear :
Workpiece to be cut: Japanese Industrial Standard (JIS) SCM440 plate
Cutting speed: 350 m/min
Depth of cut: 2 mm
Feed rate: 0.4 mm/tooth
Time: 20 minutes
The average of the ten widths is shown in Tables 7 and 8.

The results shown in Tables 5 to 8 demonstrate that each of the face milling tools having milling inserts (types 1 to 10) of Example 2 does not cause defects nor chipping at the cutting edge section during high-feed-rate cutting at a low ridge line angle of the insert, a relatively low axial rake angle of the insert to the cutter body, and maintains superior cutting performance, because the hard phase of the cermet constituting the insert is specified and the binding phase in the cermet has a high W content. In contrast, each of the face milling tools having milling inserts (types 1 to 10) for comparison exhibits undesirable heat resistance and undesirable plastic deformation resistance, and does not maintain desirable strength of the bonding phase at high temperatures, although the cermet has the same type of hard magnetic phase as that in the inserts of the present invention, because the binding phase in the cermet does not contain W or contains at most 7 percent by weight of W. As a result, defects and chipping occur at the cutting edge section and the insert has a relatively low service life.

### (Example 3)

As powdered raw materials for forming the hard phase, a powdered compound carbonitride of Ti and Ta having a composition of (Ti_{0.9}Ta_{0.1})C_{0.7}N_{0.3} by atomic percent, a powdered compound carbonitride of Ti and Nb having a composition of (Ti_{0.9}Nb_{0.1})C_{0.7}N_{0.3} by atomic percent, a powdered compound carbonitride of Ti, Ta, and Zr having a composition of (Ti_{0.8}Ta_{0.1}Zr_{0.1})C_{0.5}N_{0.5} by atomic percent, a powdered compound carbonitride of Ti having a composition of TiC_{0.5}N_{0.5} by atomic percent, a powdered compound carbonitride of Ti, W, and Nb having a composition of (Ti_{0.7}W_{0.2}Nb_{0.1})C_{0.4}N_{0.6} by atomic percent, a powdered compound carbonitride of Ti and V having a composition of (Ti_{0.9}V_{0.1})C_{0.6}N_{0.4} by atomic percent, a powdered compound carbonitride of Ti, V, and Zr having a composition of (Ti_{0.8}V_{0.1}Zr_{0.1})C_{0.7}N_{0.3} by atomic percent, a powdered compound carbonitride of Ti and Zr having a composition of (Ti_{0.7}Zr_{0.3})C_{0.5}N_{0.5} by atomic percent, a powdered compound carbonitride of Ti, Ta, and Nb having a composition of (Ti_{0.8}Ta_{0.1}Nb_{0.1})C_{0.7}N_{0.3} by atomic percent, and a powdered compound carbonitride of Ti, Ta, V, and W having a composition of (Ti_{0.7}Ta_{0.1}V_{0.1}W_{0.1})C_{0.6}N_{0.4} by atomic percent, were prepared with predetermined mean grain sizes in a range of 1 to 2 µm. And powdered TiN, powdered ZrC, powdered TaC, powdered NbC, and powdered WC were prepared with mean grain sizes in a range of 1 to 2 µm. As powdered raw materials for forming the binding phase, powdered W, powdered Ni, and powdered Co were prepared. These powdered binding materials had mean grain sizes in a range of 1 to 2 µm.

These raw materials were compounded based on the formulations shown in Tables 9 and 10, and were wet-mixed in a ball mill for 72 hours. Each mixture was dried and press-molded under a pressure of 147,15 MPa [15 kgf/mm²] to form a green compact. The green compact was heated to 1,550°C at a heating rate of 2 °C/min in a vacuum, was maintained at 1,550°C for 1.5 hours in a reduced-pressure nitrogen atmosphere of 5 torr for sintering, and was then cooled. The main cutting edge and the wiper cutting edge of each cutting edge section were subjected to honing as shown in Tables 11 and 12, wherein the honed width of the main cutting edge was an ordinary value while the honed width of the flat cutting edge was less than ordinary values. Cermet substrates (types A to J) of the present invention for face milling tools and cermet substrates (types a to j) for comparison were thereby prepared. Each cermet substrate had a shape of SEEN1203AFTN1.

In the cermet substrates (types a to j) for comparison, the binding phases contain 7 percent by weight or less of W or do not contain W.

A texture of an arbitrary cross-section of each cermet substrate was observed by scanning electron microscopy, and the rate of the hard phase having a core-shell structure in the texture was determined from the observed image using an image analyzer, as shown in Tables 11 and 12.

The W, Ni, and Co contents by weight in the binding phase of the cermet substrate were determined by a wet analysis process, as shown in Tables 11 and 12.

These cermet substrates (types A to J of the present invention and types a to j for comparison) were ultrasonically cleaned in acetone, were dried, and were coated by the methods shown in Table 13 and 14. A hard coat layer having a designed composition and a designed thickness shown in Table 13 or 14 was formed on each cermet substrate. Coated inserts (types 1 to 10) of the present invention for face milling tools and coated inserts (types 1 to 10) for comparison were thereby prepared.

A cross-section of the hard coating layer of each coated insert was observed by scanning electron microscopy to determine the composition and the mean thickness thereof. The composition and the mean thickness were substantially equal to the designed composition and the designed thickness shown in Tables 13 and 14.

One milling insert of each type was mounted with screws onto the front face of a cutter having a face diameter of 200 mm, as shown in Fig. 1(a), to form a face milling tool, and an steel alloy was subjected to a dry, high-feed-rate milling cutting test using the face milling tool under the following conditions to determine the cutting duration until the cutter reached the end of its service life:
Workpiece to be cut: Japanese Industrial Standard (JIS) SNCM439 plate
Cutting speed: 350 m/min
Depth of cut: 1.5 mm
Feed rate: 0.5 mm/tooth

The surface roughness of the cut workpiece after one minute from the start of cutting was measured. The surface roughness Rz was in a range of 1.9 to 2.8 and was a significantly satisfactory level.

The results shown in Tables 9 to 14 demonstrate that each of the face milling tools having milling inserts (types 1 to 10) of the present invention exhibits high plastic deformation resistance during high-feed-rate cutting using a face cutting edge having a decreased honed width of 0.02 to 0.08 mm, for the purpose of maintaining a satisfactory cut surface roughness, and maintains superior cutting performance for long periods, because the binding phase in the cermet has a high W content. In contrast, each of the face milling tools having milling inserts (types 1 to 10) for comparison exhibits uneven wear due to plastic deformation during high-feed-rate cutting using a face cutting edge having a decreased honed width, and has a relatively short service life, because the binding phase in the cermet does not contain W or contains at most 7 percent by weight of W, which is insufficient to maintain desirable plastic deformation resistance.

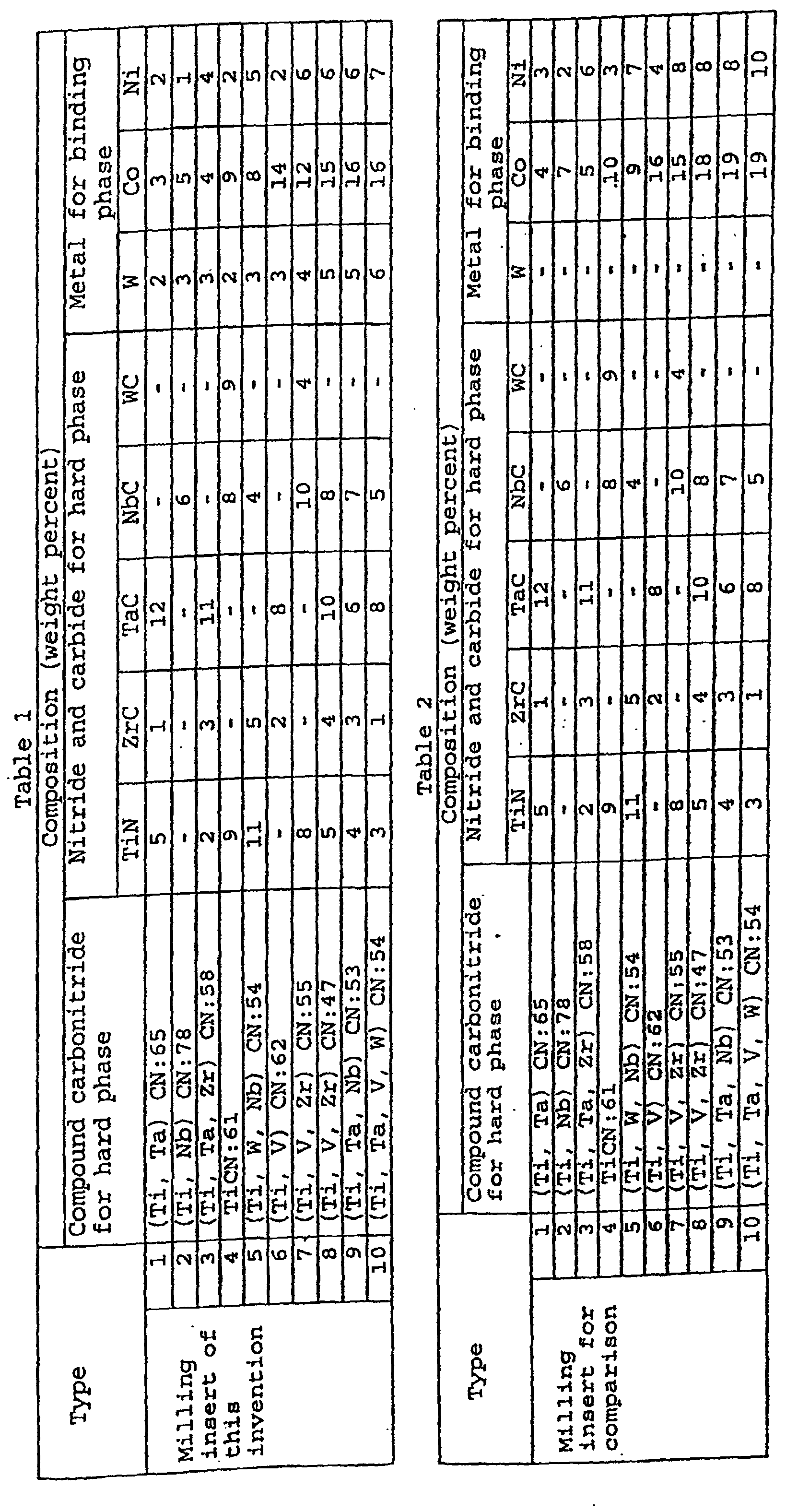

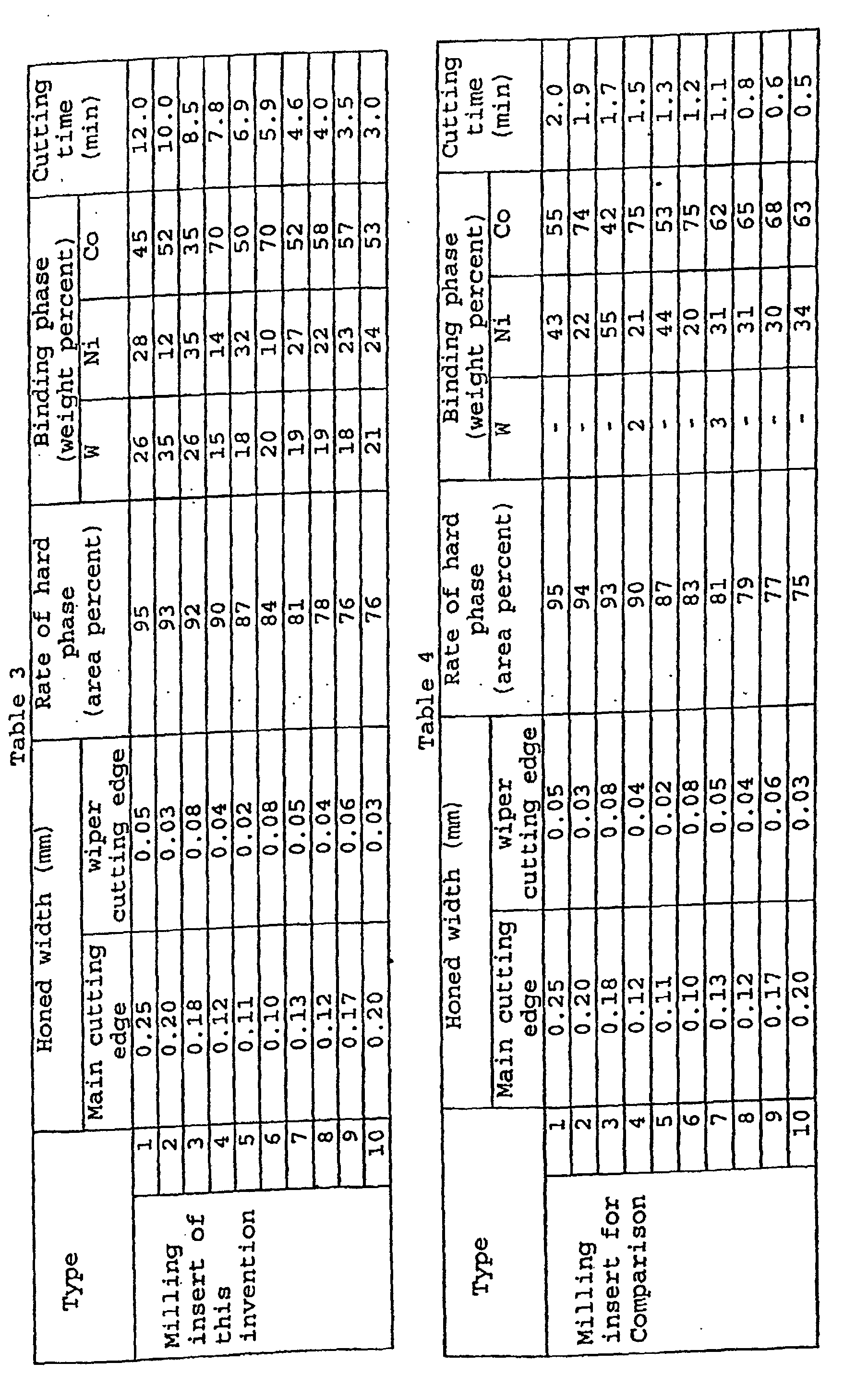

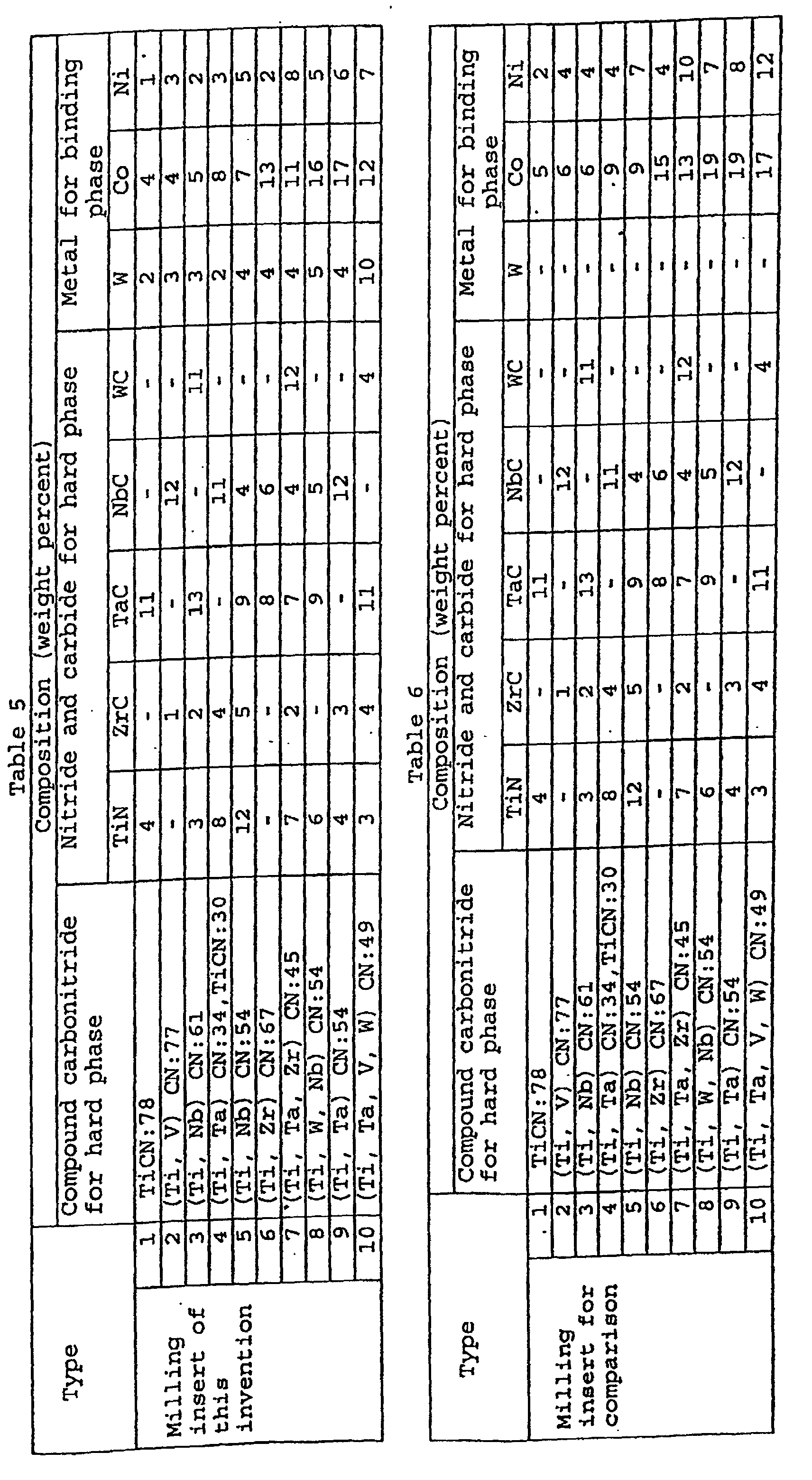

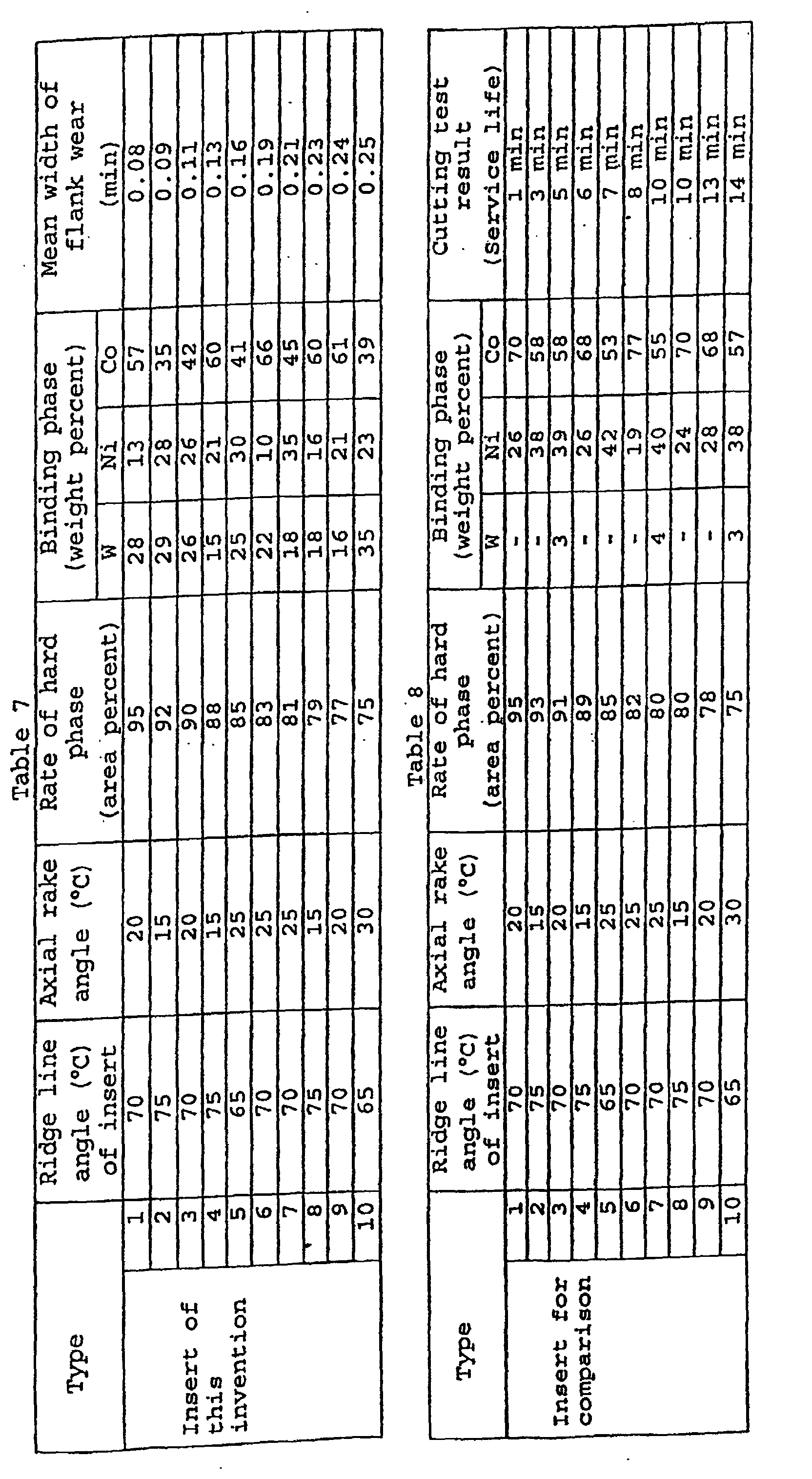

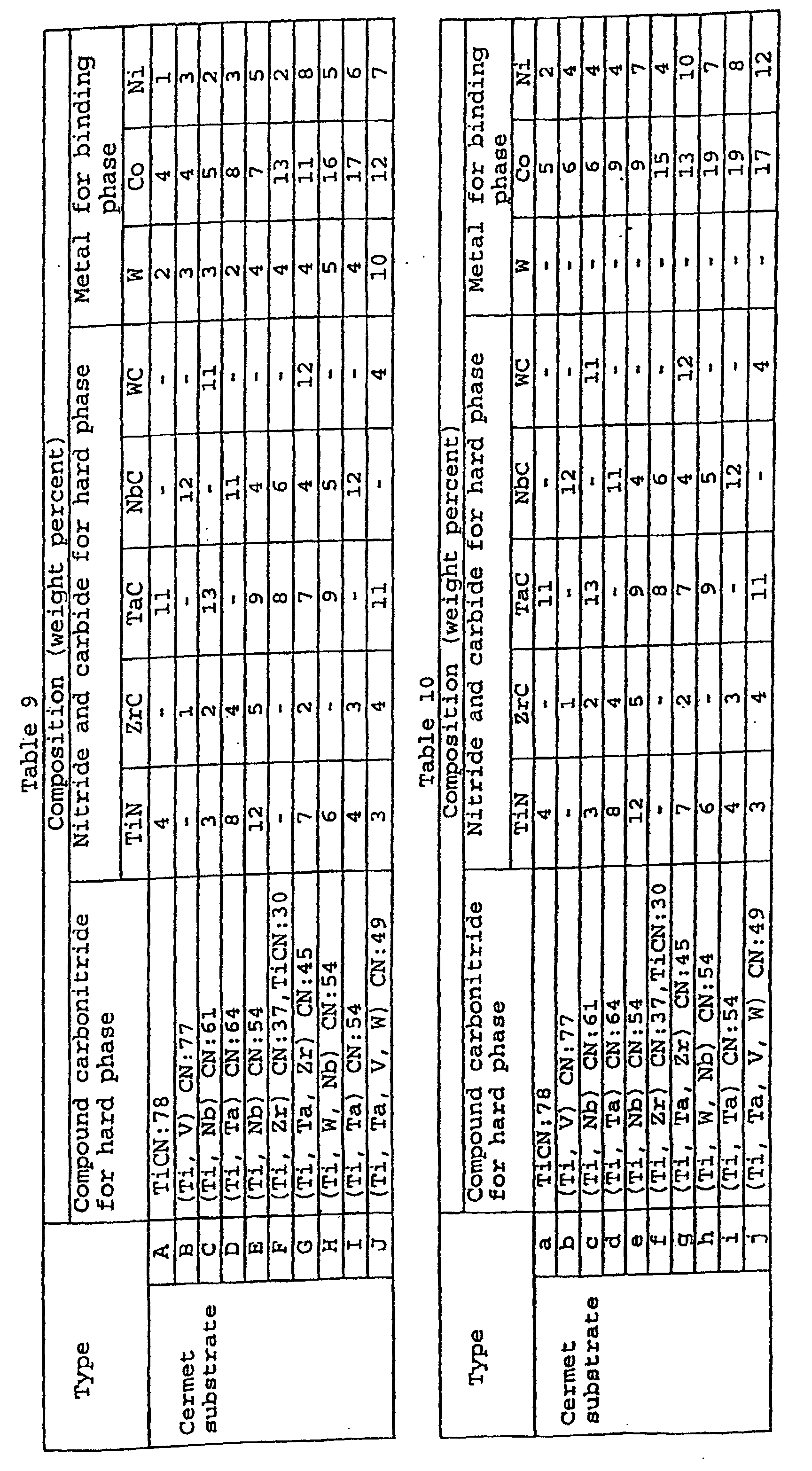

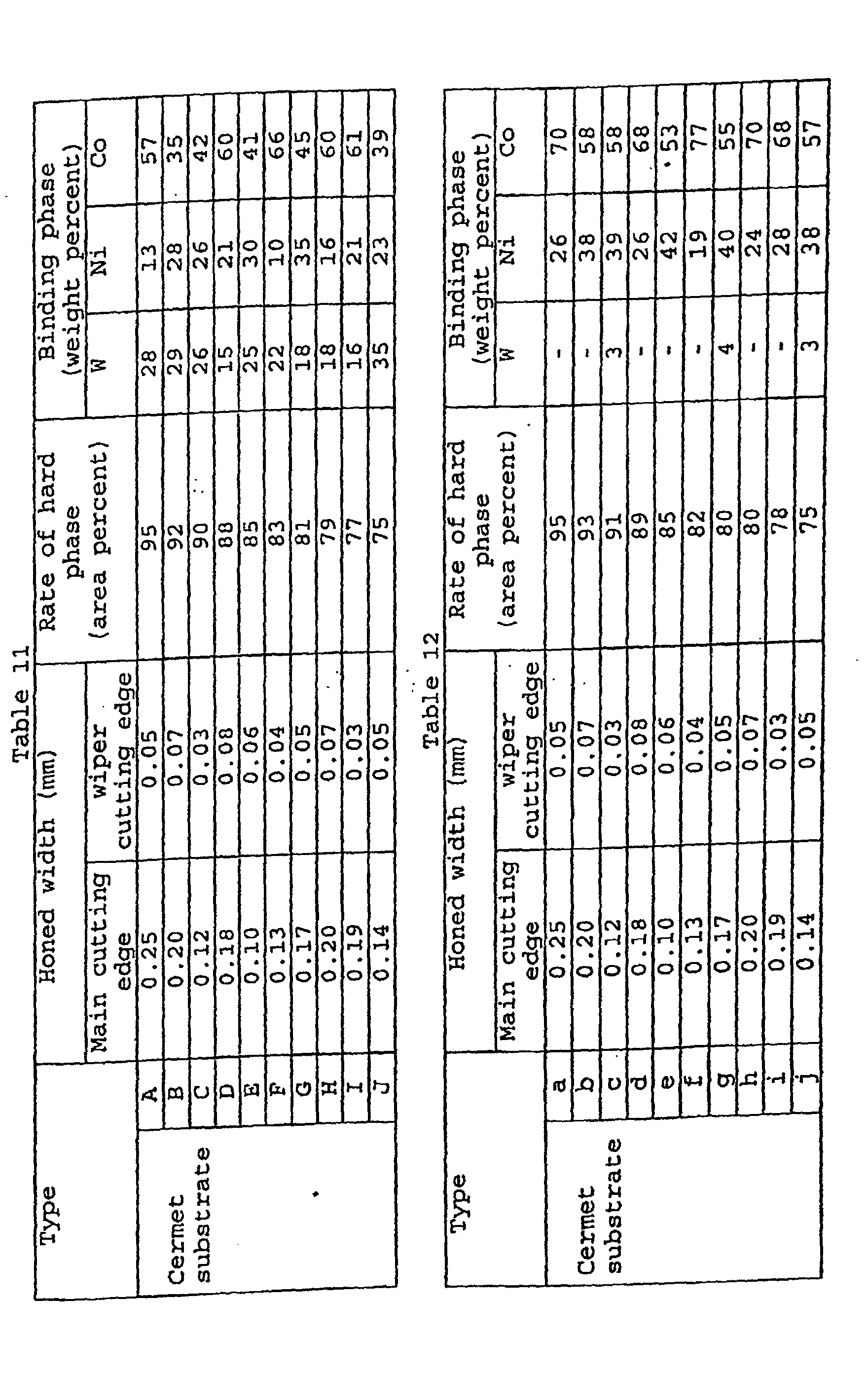

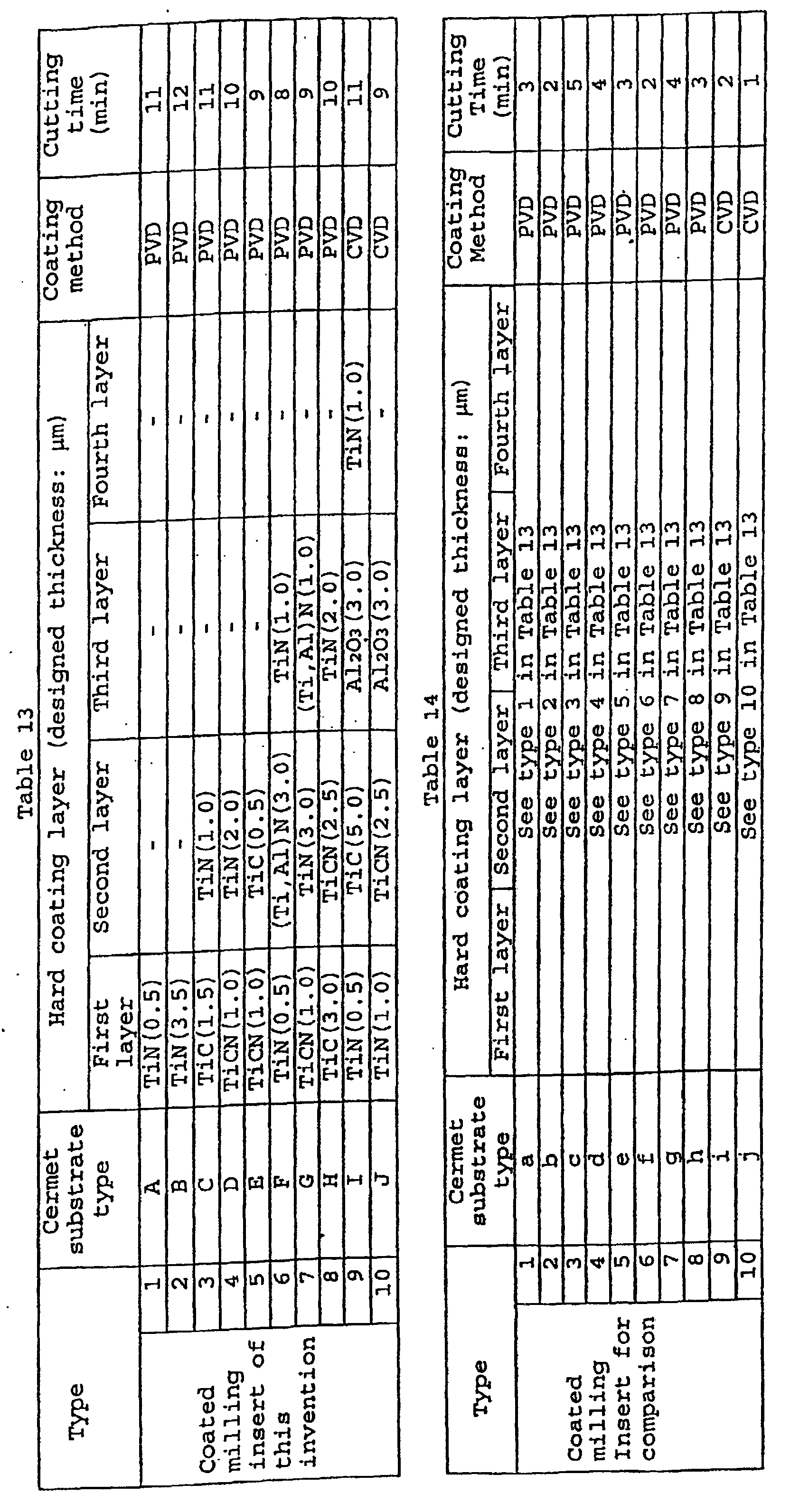

## Claims

1. A cermet cutting insert (12) for face milling having a main cutting edge (15) and a wiper cutting edge (13), the honed width of the main cutting edge (15) is in a range of 0.10 to 0.25 mm, and the honed width of the wiper cutting edge (13) is 0.02 to 0.08 mm, wherein the cermet cutting insert (12) has a texture comprising 75 to 95 percent by area of a carbonitride hard phase primarily Ti and the balance being a binding phase and incidental impurities, according to microscopic texture observation of a cross-section of the cermet, wherein, the hard phase has a core shell structure comprising a core and a shell which are substantially composed of compound carbonitride of Ti and M wherein M is at least one metal selected from the group consisting of Ta, Nb, V, W and Zr, and the binding phase consists a W-Ni-Co alloy containing tungsten (W): 15 to 35 percent by weight, nickel (Ni): 10 to 35 percent by weight, and cobalt (Co): 35 to 70 percent by weight, wherein the total amount of tungsten, nickel and cobalt is at least 90 percent by weight.

2. A cermet cutting insert (12) according to claim 1, wherein the cermet cutting insert (12) is covered with a hard coating layer which is formed by at least one process of a chemical vapor deposition process and a physical vapor deposition and which has a mean thickness of 0.5 to 10 µm.

3. A cermet cutting insert (12) according to claim 2, wherein the hard coat layer comprises at least one layer composed of nitride, carbide, oxide, and carbonitride of at least one element of Ti and Al.

4. A face milling tool (10) comprising a ring tool body and a cermet cutting insert (12) according to claim 1 to 3, wherein the angle defined by a tooth face and a flank at a cutting edge section is 65 to 75° and the cermet cutting insert (12) is mounted onto the ring tool body at an axial rake angle of 15 to 30°.

## Patentansprüche

1. Cermet-Schneideinsatz (12) zum Flachfräsen mit einer Hauptschneidkante (15) und einer Wischschneidkante (13), wobei die gehonte Breite der Hauptschneidkante (15) im Bereich von 0,1 bis 0,25 mm liegt und die gehonte Breite der Wischschneidkante (13) 0,02 bis 0,08 mm beträgt, wobei der Cermet-Schneideinsatz (12) eine Textur mit 75 bis 95 Flächenprozent einer harten Karbonitridphase, hauptsächlich Ti, hat und die Balance eine Bindephase und gelegentlich auftretende Unreinheiten sind, gemäß einer mikroskopischen Texturbetrachtung eines Querschnitts des Cermets, wobei die harte Phase eine Kernschalenstruktur mit einem Kern und einer Schale hat, die im wesentlichen aus einer Karbonitridverbindung aus Ti und M bestehen, wobei M zumindest ein Metall aus der Gruppe von Ta, Nb, V, W und Zr ist, und wobei die Bindephase eine W-Ni-Co Legierung mit 15 bis 35 Gew-% Tungsten (W), 10 bis 35 Gew-% Nickel (Ni) und 35 bis 70 Gew-% Kobalt (Co) ist, wobei die Gesamtmenge an Tungsten, Nickel und Kobalt zumindest 90 Gew-% beträgt.

2. Cermet-Schneideinsatz (12) nach Anspruch 1, wobei der Cermet-Schneideinsatz (12) mit einer harten Schicht bedeckt ist, die durch chemische Dampfabscheidung und/oder physikalische Dampfabscheidung ausgeformt ist und eine mittlere Dicke von 0,54 bis 10 µm hat.

3. Cermet-Schneideinsatz (12) nach Anspruch 2, wobei die harte Beschichtung zumindest eine Schicht aus Nitrid, Karbid, Oxid und Karbonitrid von Ti und/oder Al aufweist.

4. Flächenfräswerkzeug (10) mit einem Ringwerkzeugkörper und einem Cermet-Schneideinsatz (12) gemäß Anspruch 1 bis 3, wobei der durch eine Zahnfläche und eine Flanke bei einem Schneidkantenabschnitt definierte Winkel 65 bis 75° beträgt und der Cermet-Schneideinsatz (12) an dem Ringwerkzeugkörper mit einem axialen Spanwinkel von 15 bis 30° angebracht ist.

## Revendications

1. Plaquette de coupe en cermet (12) destinée au fraisage de surface, possédant un bord de coupe principal (15) et un bord de coupe de planage (13), la largeur affûtée du bord de coupe principal (15) étant comprise entre 0,10 et 0,25 mm, et la largeur affûtée du bord de coupe de planage (13) étant comprise entre 0,02 et 0,08 mm, dans laquelle la plaquette de coupe en cermet (12) possède une texture de surface comprenant 75 à 95 % d'une phase dure en carbonitrure principalement de titane et le reste étant une phase d'agglutination et d'impuretés accidentelles selon une observation microscopique de la texture d'une coupe transversale du cermet, dans laquelle la phase dure a une structure de noyau en coquille comprenant un noyau et une coquille qui sont sensiblement composées d'un composé en carbonitrure de titane et de M, dans lequel M est au moins un métal choisi dans le groupe constitué par le tantale, le niobium, le vanadium, le tungstène et le zirconium, et dans lequel la phase d'agglutination est constituée d'un alliage tungstène-nickel-cobalt contenant 15 à 35 % en poids de tungstène (W), 10 à 35 % en poids de nickel (Ni) et 35 à 70 % de cobalt (Co), dans lequel la quantité totale de tungstène, de nickel et de cobalt est d'au moins 90 % en poids.

2. Plaquette de coupe en cermet (12) selon la revendication 1, dans laquelle la plaquette de coupe en cermet (12) est recouverte d'une couche de revêtement dur qui est au moins constituée par un procédé soit de processus de dépôt chimique de vapeur, soit de processus de dépôt physique de vapeur, et qui a une épaisseur moyenne de 0,5 à 10 µm.

3. Plaquette de coupe en cermet (12) selon la revendication 2, dans laquelle la couche de revêtement dur comprend au moins une couche composée de nitrure, de carbure, d'oxyde, et de carbonitrure d'au moins un élément de titane et d'aluminium.

4. Outil de fraisage de surface (10) comprenant un corps annulaire d'outil et une plaquette de coupe en cermet (12) selon l'une des revendications 1 à 3, dans lequel l'angle défini par la face de la dent et le flanc de la section de bord de coupe est compris entre 65 et 75° et dans lequel la plaquette de coupe (12) est montée dans le corps annulaire d'outil avec un angle axial de coupe compris entre 15 et 30°.
